# EUROPEAN PATENT APPLICATION

(11) **EP 2 813 950 A1**
(43) Date of publication of application: **17.12.2014**
(21) Application number: 13746675.1
(22) Date of filing: 08.02.2013
(51) Int. Cl.: G06F 13/00, H02J 13/00

(54) **TRANSFORMER SUBSTATION AUTOMATION SYSTEM AND AUTOMATIC RECOGNITION METHOD FOR TERMINAL**

(30) Priority: 10.02.2012 JP 2012027467
(71) Applicant: Kabushiki Kaisha Toshiba, Minato-ku Tokyo 105-8001 (JP)
(72) Inventor: MORITA, Shigekazu, Tokyo 105-8001 (JP); KANEDA, Keiichi, Tokyo 105-8001 (JP)
(74) Representative: Ekstedt, Måns
(86) International application number: PCT/JP2013/053134
(87) International publication number: WO 2013/118889

(57) **Abstract**

A plug-and-play transformer station automation system automatically recognizing a setting at the time of installing an IED or an MU when a new system is constructed and the number of lines is increased, and a terminal automatic recognition method by that system are provided. A transformer station automation system 10 connects multiple protective control terminals 3-1 to 3-n with device terminals 4-1 to 4-n relaying a monitoring/controlling target device through a process bus 7, and connects a central monitor/control apparatus 1 with the protective control terminals 3-1 to 3-n through a station bus 6. The central monitor/control apparatus 1 has a function of checking a symbol and a letter string subjected to screen display extracted from a CID file with information in the SSD file to generate an SCD file.

## Description

### FIELD

Embodiments of the present disclosure relates to a transformer station automation system constructed with an application of a process bus complying with the IEC 61850 standard, and a terminal automatic recognition method in that system.

### BACKGROUND

When, in addition to a case in which a transformer station automation system is newly constructed, the number of lines is increased, installation of a device for the increase in the number of lines, a device terminal for that device, and a protective control terminal becomes necessary. In addition, after the start of a system operation, it is necessary to replace a terminal on site when the line terminal becomes defective.

Recently, transformer station automation systems having undergone a system construction based on a transmission coupling through a network become a mainstream. Among those systems, a system constructed with an application of a process bus in compliance with the IEC 61850 standard is becoming popular. The process bus is connected with a Merging Unit (hereinafter, referred to as MU) that is a device terminal, and an Intelligent Electronic Device (hereinafter, referred to as IED) that is a protective control terminal to enable data exchange among devices.

When a device terminal and a protective control terminal coupled through a process bus currently in operation are connected to a network, generation of various files defined in accordance with the IEC 61850 standard, setting of a network thereof, and an individual setting for a line terminal are necessary, and such settings are made manually by a human using an exclusive edit tool. However, the IED and the MU need a large number of settings, and thus a manual setting by a human needing expertness takes a large time, or there is a possibility that a setting error occurs.

Hence, in an installation of an IED and an MU when a transformer station automation system is newly constructed, an installation of additional devices when the number of lines is increased, and a replacement with a substitute device when a terminal defect occurs, it is desirable to automatically recognize a setting, thereby eliminating a setting by a human. In this embodiment, in the following explanation, such an automatic setting function will be referred to as plug-and-play.

An example conventional plug-and-play technology in a network connection is a universal plug-and-play. In association with such a technology, a technology to appropriately relay a request message supplied from a client over a network to a device unit is revealed. This technology enables, for example, information supply of a device function, a device detection, and an IP-address obtainment.

As to the various setting files defined in accordance with the IEC 61850-6 standard, various files that will be source data to construct a system database are generated through an edit tool. For example, from an ICD (IED Capability Description) file related to each device and each IED, and an SSD (System Specification Description) file defining the specification information of a transformer station, an SCD (Substation Configuration Description)file defining the whole configuration information of the transformer station (containing the contents of the SSD file and information of all IEDs (ICD)), and a CID (Configured IED Description) file that is individual information for each IED and MU are generated. Those files are generated through an edit tool, and installed in each terminal.

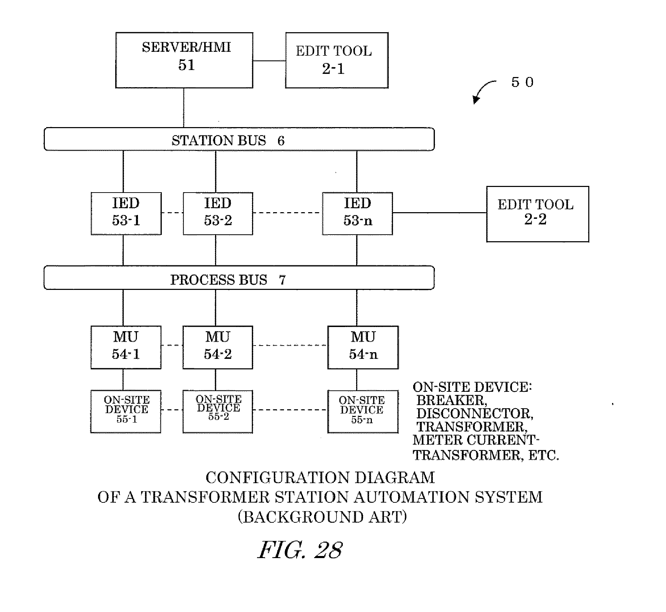

FIG. 28 is a configuration diagram of a conventional transformer station automation system. According to this transformer station automation system 50, a server/HMI 51 that is a central monitor/control apparatus for in-line monitoring and controlling, and IEDs 53-1 to 53-n that are protective control terminals disposed and distributed facility by facility are connected together through a station bus 6. In addition, on-site devices 55-1 to 55-n line by line are connected to a process bus 7 through MUs 54-1 to 54-n that are device terminals, respectively. Still further, edit tools 2-1, 2-2 for system data construction are connected to the server/HMI 51 and the IEDs 53-1 to 53-n, respectively.

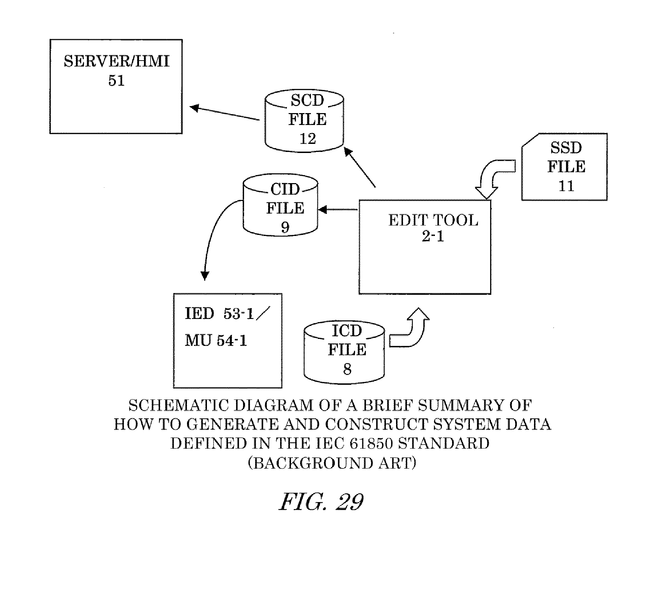

FIG. 29 illustrates a brief summary of how to generate and construct system data defined in the IEC 61850 standard.

First, together with hardware, an ICD file 8 for the IED 53-1 or MU 54-1 is delivered from the manufacturer of the IED 53-1 or MU 54-1. Next, the edit tool 2-1 generates, from the ICD file 8, and information of the SSD file 11 including the transformer station system configuration, the device configuration, the one-line wiring diagram, the IP address, and the unit name, etc., an SCD file 12 and a CID file 9. The SCD file 12 is installed in the server/HMI 51. Conversely, the CID file 9 contains the information, such as the IP address and the unit name, and is the information necessary at the time of establishing a LAN connection, and is subjected to a feedback to the IED 53-1 or MU 54-1.

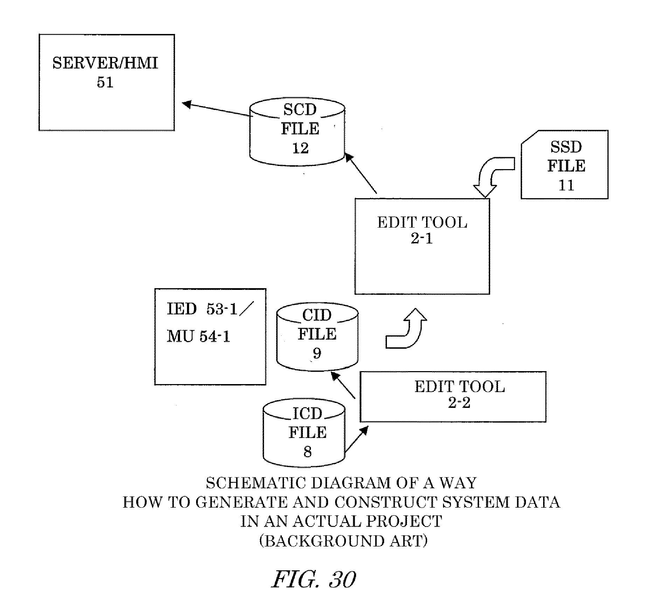

Next, FIG. 30 illustrates an example system data construction in an actual project.

In the actual project, in order to clarify the supply responsibility of each terminal (e.g., IED 53-1 and MU 54-1), the manufacturer of the IED 53-1 and the MU 54-1 generate the CID file 9 from the ICD file 8 using the edit tool 2-2, and delivers such a file. Hence, the edit tool 2-1 only generates the SCD file 12 based on the SSD file 11. Since the CID file 9 contains the name of the IED and the IP address, generation of such information using the edit tool 2-1 is unnecessary. What is done using the edit tool 2-1 is only to assign various information defined by the CID file 9 to a symbol and an event letter string on the screen, and to input those.

### [Related Technical Documents]

### [Patent Documents]

Patent Document 1: JP 2007-188255 A

### [NON-PATENT LITERATURE]

Non-Patent Document 1: Standard Number IEC61850-6 Communication networks and systems in substations-Part 6: Configuration description language for communication in electrical substations related to IEDs, Chapter 9, ANNEX-E,pp28-73 and page 138

According to the above-explained universal plug-and-play, however, although information supply of the device function, device detection, and IP address obtainment are enabled, it is not possible to automatically recognize that the IED and the MU subjected to an addition or a replacement are the terminals subjected to such addition or replacement over the system. In addition, data transmission and exchange with the necessary connection party over the system is not surely performed. Hence, it is not a true plug-and-play for a terminal automatic connection with an application of a process bus.

In addition, in generation of various files using an edit tool in accordance with the IEC 61850 standard, the process up to an installation of the generated file in each terminal is enabled, but when the IED 53-1 and the MU 54-1 subjected to an addition or a replacement are additionally installed to the process bus 7, no information definition and incorporation procedure are defined to automatically recognize a local terminal as a newly assigned or replacement terminal. More specifically, necessary information to edit the SSD file 11 to generate the SCD file 12 using the edit tool 2-1, cut out the CID file 9 and distribute the CID file 9 to the IED 53-1 and the MU 54-1 and to perform automatic recognition is absent. This disturbs a realization of the true plug-and-play.

Still further, when an IED for a bus line protection is additionally installed, it is necessary to receive electric current data of a system from the MU 54-1 to 54-n in all lines connected to this bus line. According to the conventional technology, however, an automatic setting is not enabled which recognizes the additionally installed IED as the device for a bus line protection, and selects a connection target MU to receive data.

### SUMMARY

It is an objective of the embodiments of the present disclosure to provide a plug-and-play transformer station automation system that can automatically recognize a setting at the time of a new installation of an IED or an MU when a new system is constructed, the number of lines is increased, a terminal is replaced with a substitute terminal at the time of an occurrence of a terminal defective, and a new IED for a bus line protection is installed, and, a terminal automatic recognition method in that system.

To accomplish the above objective, according to one embodiment of the present disclosure, there is provided a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the central monitor/control apparatus comprising, for automatically recognizing a newly assigned protective control terminal: a receiver obtaining a CID file containing unique information of the protective control terminal assigned to the process bus; a screen data generating processor extracting a symbol to be screen displayed and a letter string from the CID file based on a predetermined rule; a registering processor registering information of an SSD file recorded with at least a system configuration of the transformer station; a checkup processor checking data of the symbol to be screen displayed and the letter string with the information of the SSD file; and a mapping processor assigning the data of the symbol to be screen displayed and the letter string to the information relating to the system configuration in the SSD file based on the unique information in the CID file to generate an SCD file when the data of the symbol to be screen displayed and the letter string are consistent to the information in the SSD file upon checkup.

In addition, according to another embodiment of the present disclosure, there is provided a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the protective control terminal comprising, for automatically recognizing a newly assigned device terminal: a receiver obtaining a CID file containing device unique information of the device terminal assigned to the process bus; a screen data generating processor extracting a symbol to be screen displayed and a letter string from the CID file based on a predetermined rule; a registering processor registering information of an ICD or SSD file recording with at least a system configuration of the transformer station; a checkup processor checking data of the symbol to be screen displayed and the letter string with the information of the ICD or SSD file; and a mapping processor assigning the data of the symbol to be screen displayed and the letter string to the information relating to the system configuration in the ICD or SSD file based on the device unique information in the CID file to generate a CID file when the data of the symbol to be screen displayed and the letter string are consistent with the information of the ICD or SSD file upon checkup.

Still further, according to another embodiment of the present disclosure, there is provided a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the protective control terminal comprising, for automatically recognizing an assignment of a new protective control terminal subjected to a transmissive connection with a plurality of device terminals: a receiver obtaining a CID file containing device unique information of a plurality of the device terminals assigned to the process bus; a registering processor registering information of an SSD file recorded with at least information on a meter current-transformer; a checkup processor checking information relating to the meter current-transformer extracted from the CID file with the information of the SSD file; a data enabling processor enabling the information relating to the meter current-transformer when the information on the meter current-transformer extracted from the CID file are consistent with the information of the SSD file upon checkup; and a mapping processor assigning the information on a system configuration in the SSD file with letter string data relating to the meter current-transformer to generate a CID file based on the information relating to the meter current-transformer in the CID file when the information on the meter current-transformer extracted from the CID file are consistent with the information of the SSD file upon checkup.

A terminal automatic recognition system by the aforementioned transformer station automation system is also an aspect of the present disclosure.

### BRIEF DESCRIPTION OF THE DRAWINGS

FIG. 1 is a configuration diagram of a transformer station automation system of a first embodiment of the present disclosure;
FIG. 2 is an automatic system data construction procedure diagram in the server/HMI of the first embodiment;
FIG. 3 is an example of information in the SSD file;
FIG. 4 is an example of information in the ICD file;
FIG. 5 is an example of information in the SCD file;
FIG. 6 is an example of information in the CID file (first example);
FIG. 7 is a block diagram illustrating a configuration of an automatic linker in FIG. 2;
FIG. 8 is a flowchart illustrating the automatic recognition method of the first embodiment;
FIG. 9 is an automatic system data construction procedure diagram in the IED of a second embodiment;
FIG. 10 is a block diagram illustrating a configuration of the automatic linker in FIG. 9;
FIG. 11 is a flowchart illustrating the automatic recognition method of the second embodiment;
FIG. 12 is an automatic system data construction procedure diagram in the IED of a fourth embodiment;
FIG. 13 is a block diagram illustrating a configuration of the automatic linker in FIG. 12;
FIG. 14 is a flowchart illustrating the automatic recognition method of the fourth embodiment;
FIG. 15 is an example of information in the CID file (second example);
FIG. 16 is a configuration diagram of a transformer station automation system according to a fifth embodiment;
FIG. 17 is an example of information in the CID file (third example);
FIG. 18 is an example of information in the CID file (fourth example);
FIG. 19 is an automatic system data construction procedure diagram in the server/HMI of the fifth embodiment (an example case when the IED is multiplexed);
FIG. 20 is a configuration diagram of a transformer station automation system of a sixth embodiment;
FIG. 21 is an example of information in the CID file (fifth example);
FIG. 22 is an example of information in the CID file (sixth example);
FIG. 23 is an automatic system data construction procedure diagram in the server/HMI of the sixth embodiment (an example case when the MU is multiplexed);
FIG. 24 is an automatic system data construction procedure diagram in the IED of the sixth embodiment (an example case when the MU is multiplexed);
FIG. 25 is a configuration diagram of a transformer station automation system of a seventh embodiment;
FIG. 26 is an automatic system data construction procedure diagram in the server/HMI of the seventh embodiment (an example case when the IED or MU is multiplexed);
FIG. 27 is an automatic system data construction procedure diagram in the IED of the seventh embodiment (an example case when the IED or MU is multiplexed);
FIG. 28 is a configuration diagram of a conventional transformer station automation system;
FIG. 29 is a schematic diagram illustrating a brief summary of how to generate and construct system data defined in the IEC 61850 standard;
FIG. 30 is a schematic diagram illustrating a way how to generate and construct system data in an actual project.

### DETAILED DESCRIPTION

Embodiments of the present disclosure will be explained in detail with reference to the accompanying drawings. In the following embodiments, it is presumed that a transmission protocol and a transmission procedure through a network plug-and-play are fully in compliance with the conventionally well-known IEC 61850 standard.

### [First Embodiment]

### (Automatic Recognition in Server/HMI when IED is Assigned to New Bus)

### (Configuration)

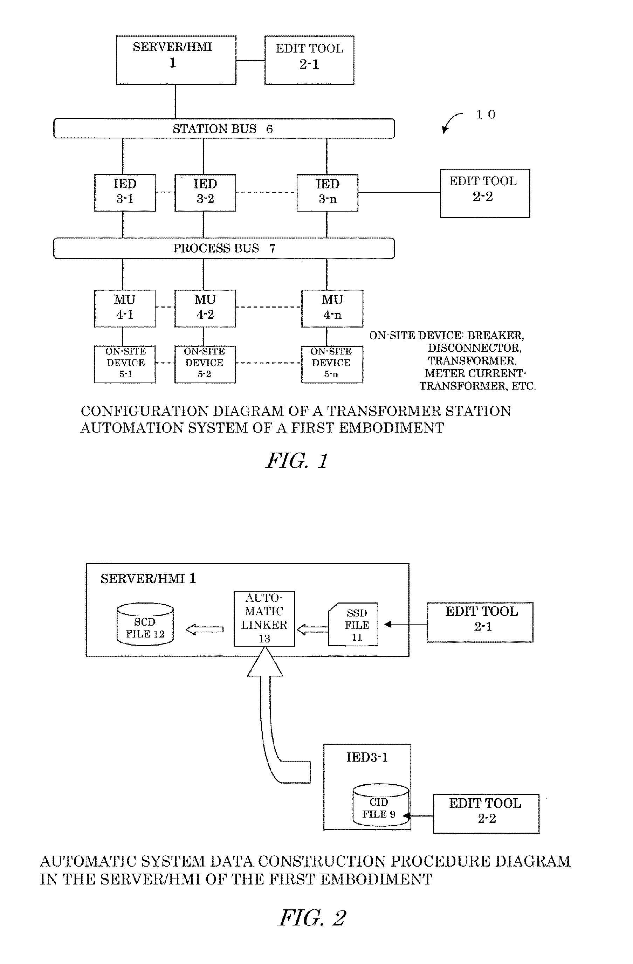

FIG. 1 illustrates a configuration of a transformer station automation system of a first embodiment of the present disclosure. In a transformer station automation system 10, a server/HMI 1 that is a central monitor/control apparatus for in-line monitoring/controlling, and IEDs 3-1 to 3-n that are protective control terminals distributed and disposed facility by facility, are connected together through a station bus 6. In addition, on-site devices (breaker, disconnector, transformer, meter-transformer, etc.,) 5-1 to 5-n line by line are connected to a process bus 7 through respective MUs 4-1 to 4-n that are device terminals. Still further, edit tools 2-1, 2-2 for system data construction are connected to the server/HMI 1 and the IEDs 3-1 to 3-n, respectively.

An explanation will be below given of, the transformer station automation system 10 to which the process bus 7 in compliance with the IEC 61850 standard is applied, a scheme of automatic recognition by the server/HMI 1 when the IED 3-1 is newly assigned to a bus with reference to FIGS. 2 to 8.

### (Automatic System Data Construction Procedure)

FIG. 2 illustrates an automatic system data construction procedure by the server/HMI 1.

First, in order to provide a plug-and-play technology for an automatic connection recognition when the IED 3-1 is newly assigned to a system bus, an SSD file 11 is generated in advance using the edit tool 2-1, and is installed in the server/HMI 1.

The CID file 9 delivered from the manufacturer of the IED 3-1 is subjected to data collection from the IED 3-1 through the system bus using the transmission rule defined in the IEC 61850, and is linked with the installed SSD file 11 by an automatic linker 13 of the server/HMI 1, thereby generating an SCD file 12. Since the CID file 9 contains the name of the IED 3-1 and the IP address thereof, it is unnecessary to generate those using the edit tool 2-1. Hence, it is fine if each kind of information defined in the CID file 9 is simply linked with a symbol and an event letter string on a screen by the automatic linker 13. Accordingly, an automatic recognition (plug-and-play) can be provided which needs no data linking work by a human performed in the cases of FIG. 29 and FIG. 30 and which can eliminate an engineering work when the IED 3-1 is assigned.

### (SSD File)

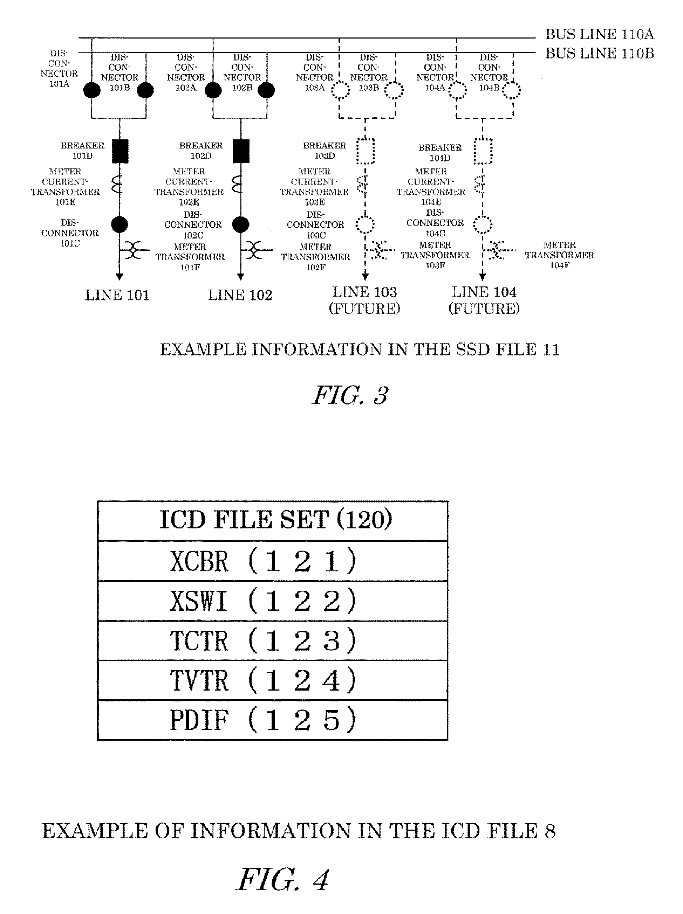

FIG. 3 illustrates an example of information in the SSD file 11 installed in advance in the server/HMI 1.

FIG. 3 illustrates an example of information on a one-line wiring diagram, and includes the name of each line (101 to 104), a disconnector symbol of each line (101A, 101B, 101C, 102A, 102B, 102C, ... 104A, 104B, 104C), a breaker symbol of each line (101D to 104D), a meter current-transformer symbol of each line (101E to 104E), a meter transformer symbol of each line (101F to 104F), and bus-line name symbols (110A, 110B). The associated symbols of the line names 103 and 104 are indicated by dotted lines as being for future lines.

### (ICD File)

FIG. 4 illustrates an example of information in an ICD file 8 (see FIGS. 29 and 30).

FIG. 4 illustrates an ICD file set (120) subjected to allocation to the one-line wiring diagram of FIG. 3, and includes a theoretical node (121) of a breaker (XCBR), a theoretical node (122) of a disconnector (XSWI), a theoretical node (123) of a meter current-transformer (TCTR), a theoretical node (124) of a meter transformer (TVTR), and a theoretical node (125) of a bus-line protective relay (PDIF).

### (SCD File)

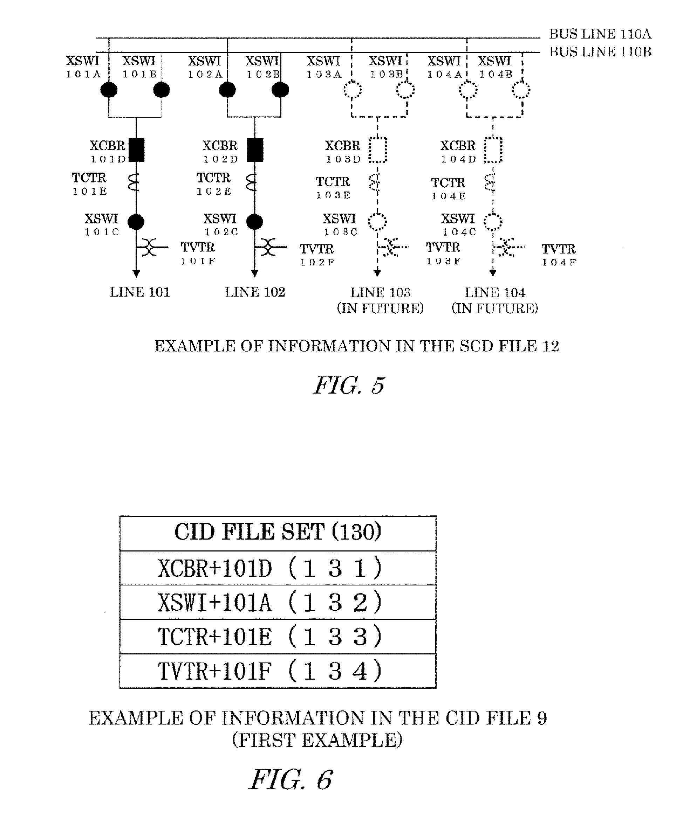

FIG. 5 illustrates an example of information in the SCD file 12.

According to conventional technologies, the information of the SSD file 11 in FIG. 3 and the information of the ICD file 8 in FIG. 4 are manually synthesized using the edit tool 2-1 to generate the SCD file 12 (see FIG. 29). The detail of the synthesis work is to associate each theoretical node information indicated in FIG. 4 with the corresponding location in the one-line drawing diagram information in FIG. 3. According to this embodiment, as will be discussed later, the automatic linker 13 of the server/HMI 1 links the ICD file with the already-installed SSD file 11 to generate the SCD file 12.

### (CID File)

FIG. 6 illustrates an example of information in the CID file 9 (first example).

The CID file set (130) includes information (131) having the theoretical node of the breaker (XCBR) added with a device unique number 101D, information (132) having the theoretical node of the disconnector (XSWI) added with a device unique number 101A, information (133) having the theoretical node of the meter current-transformer (TCTR) added with a device unique number 101E, and information (134) having the theoretical node of the meter transformer (TVTR) added with a device unique number 101F.

According to conventional technologies, after the CID file 9 is created, as illustrated in FIG. 29, such file is subjected to a feedback to the IED 53-1 or the MU 54-1 and installed therein, thereby completing the system data construction. The reason why such a file is subjected to a feedback is that as is clear when the example of information in the CID file 9 in FIG. 6 is compared with the example of information in the ICD file 8 in FIG. 4, the CID file 9 is the example of information in the ICD file 8 in FIG. 4 added with a device unique number, and when a file containing the device unique information is subjected to a feedback to the IED 53-1 or the MU 54-1, it becomes possible over the system to self-recognize what device the local IED 53-1 or MU 54-1 is.

Conversely, according to this embodiment, as will be explained later, various information defined in the CID file 9 and a symbol on a screen and an event letter string thereon are simply linked with each other by the automatic linker 13.

### (Configuration of Automatic Linker)

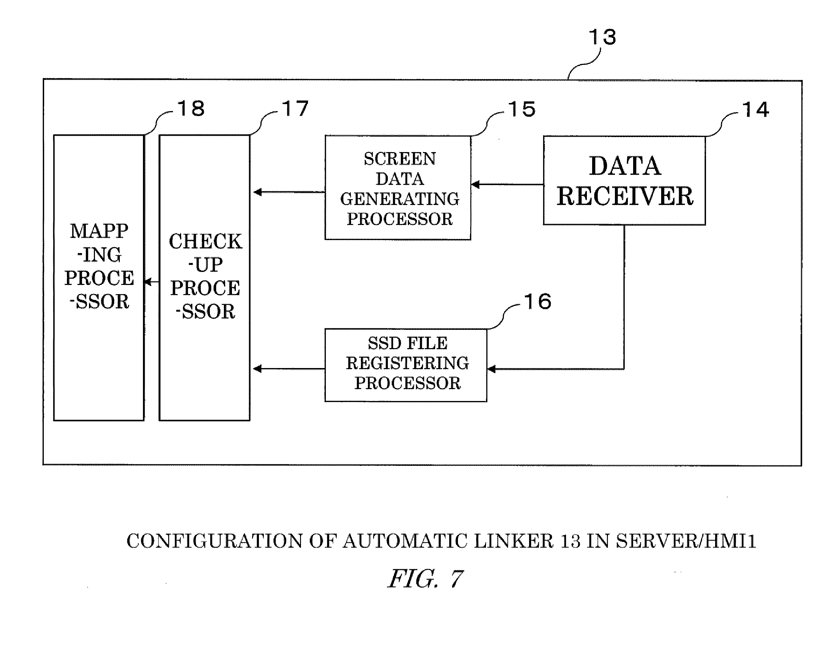

FIG. 7 is a block diagram illustrating a configuration of the automatic linker 13 of the server/HMI 1. The automatic linker 13 includes a data receiver 14 that receives the CID file 9, a screen data generating processor 15 that extracts corresponding symbol to screen displayed and letter string from the extracted theoretical node from the information in the CID file 9, an SSD file registering processor 16 that registers the SSD file information, a checkup processor 17 that checks the screen data with the SSD file information, and a mapping processor 18 which assigns the screen data as the one-line wiring diagram and a message on an event screen to generate the SCD file, and which registers the generated file in the server/HMI 1.

### (Automatic Recognition Method)

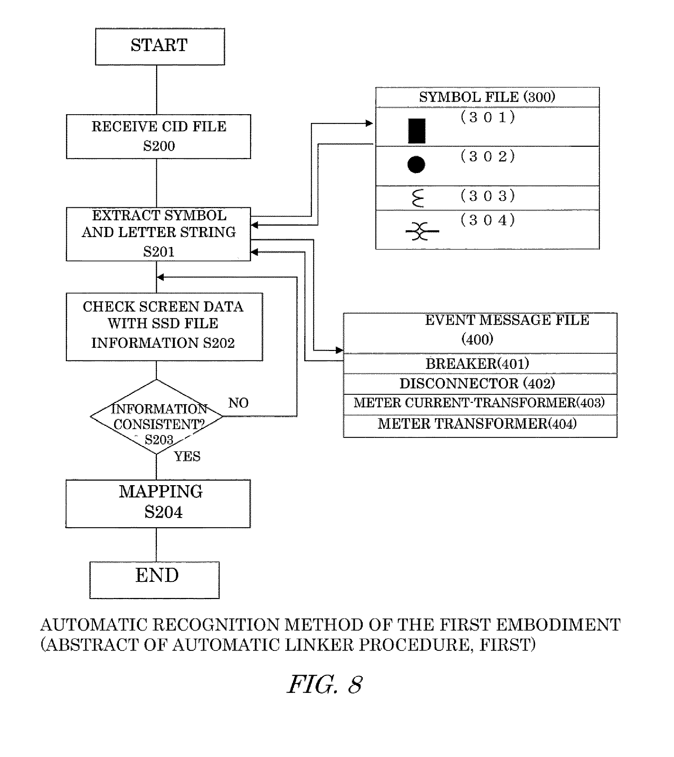

A detail of the automatic recognition method will be explained with reference to FIG. 8. In FIG. 8, the data receiver 14 of the automatic linker 13 collects the CID file 9 through a transmission rule defined in the IEC 61850 standard (S200). Next, based on the theoretical node extracted from the information in the CID file 9 in FIG. 6, the screen data generating processor 15 extracts the symbol to be screen displayed and the letter string corresponding to the theoretical node from a symbol file (300) and an event message file (400) registered in advance (S201). When, for example, the theoretical node is XCBR (131), a "breaker" symbol 301, and an event message 401 for the breaker are extracted from the symbol file 300 and the event message file 400, respectively.

In addition, the checkup processor 17 checks the screen data corresponding to each theoretical node generated by the screen data generating processor 15 with information in the SSD file 11 registered in advance by the SSD file registering processor 16 (S202). Information in the already-registered SSD file 11 in this case is, according to the above-explained case, the event message of the breaker and the "breaker" symbol in the case of XCBR.

Upon checkup, in a determination as to whether or not both information are consistent with each other (S203), when the consistency of information is found (S203: YES), the process progresses to a mapping process S204 of the received data. When pieces of information are inconsistent (S203: NO), the checkup process S202 of the screen data with the SSD file information is repeated. Subsequently, based on the device unique number in the information in the CID file 9, the mapping processor 18 assigns the symbol and the event message obtained as a result of the checkup process as the one-line wiring diagram and the message on the event screen to generate the SCD file 12 in FIG. 5, and registers the generated file in the server/HMI (S204).

### (Advantageous Effect)

According to this embodiment, it becomes possible to automatically recognize the IED 3-1 newly assigned to the bus through the above-explained method. Hence, an individual setting of each line terminal that needs expertness for an exclusive tool by a human becomes unnecessary, and it is expected that a latent error due to a false setting can be prevented. In addition, it is expected that the reliability can be improved and a power suspension time relating to an installation of a new device can be reduced.

### [Second Embodiment]

### (Automatic Recognition in IED 3-1 when MU is Assigned to New Bus)

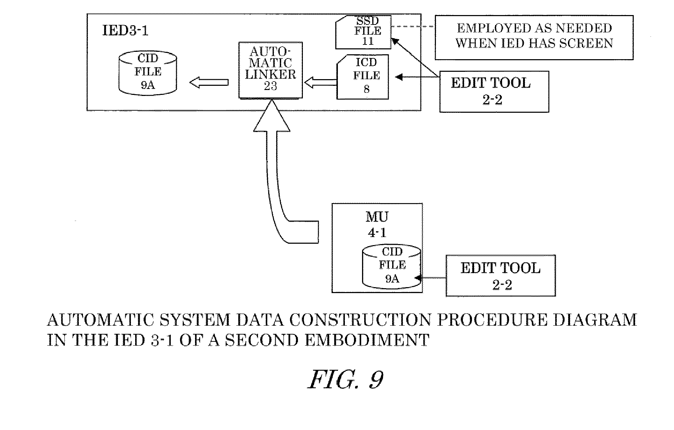

Next, an explanation will be given of a transformer station automation system of a second embodiment of the present disclosure with reference to FIGS. 9 to 11. The first embodiment relates to a scheme of causing the server/HMI 1 to automatically recognize a newly assigned IED 3-1 when the IED 3-1 is newly assigned to a new system bus, but the second embodiment relates to a scheme of causing the IED 3-1 to automatically recognize a newly assigned MU 4-1 when the MU 4-1 is assigned to a new process bus. Roughly speaking, in comparison with the first embodiment, the second embodiment relates to a scheme of assuming the IED 3-1 with a screen function as the server/HMI 1.

### (Automatic System Data Construction Procedure)

FIG. 9 is an automatic system data construction procedure diagram in the IED 3-1.

First, in order to provide a plug-and-play technology for an automatic recognition when the MU 4-1 is newly assigned to a process bus, the ICD file 8 is prepared in advance using the edit tool 2-2, and is installed in the IED 3-1.

The CID file 9 delivered from the manufacturer of the MU 4-1 is subjected to data collection from the MU 4-1 through the process bus based on a transmission rule defined in the IEC 61850 standard, and is linked with the already-installed ICD file 8 by an automatic linker 23 to generate a CID file 9A.

Since the name of the MU 4-1 and the IP address thereof are contained in the CID file 9 at the MU 4-1, it is unnecessary to generate those pieces of information using the edit tool 2-2. Hence, various pieces of information defined in the CID file 9 at the MU 4-1 are simply linked with the symbol and the event letter string to be displayed on the screen at the IED contained in the ICD file 8 or the SSD file 11 by the automatic linker 23. Accordingly, automatic recognition (plug-and-play) which needs no data linking work carried out by a human in the case of the conventional technologies, and which can eliminate an engineering work when adding the MU can be provided.

### (Configuration of Automatic Linker)

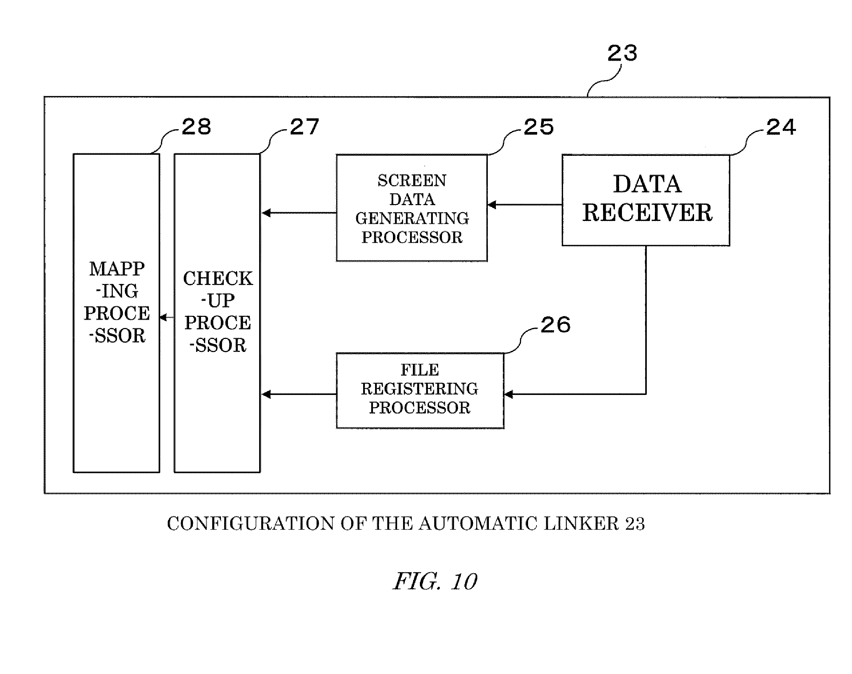

FIG. 10 is a block diagram illustrating a configuration of the automatic linker 23 in the IED 3-1. The automatic linker 23 includes a data receiver 24 that receives the CID file 9, a screen data generating processor 25 that extracts corresponding symbol to be screen displayed and letter string from the extracted theoretical node from the information in the CID file 9, a file registering processor 26 that registers the ICD file or SSD file information, a checkup processor 27 that checks the screen data with the ICD file or SSD file information, and a mapping processor 28 which assigns the screen data as the one-line wiring diagram and a message on an event screen to generate the CID file 9A, and which registers the generated file in the IED 3-1.

### (Automatic Recognition Method)

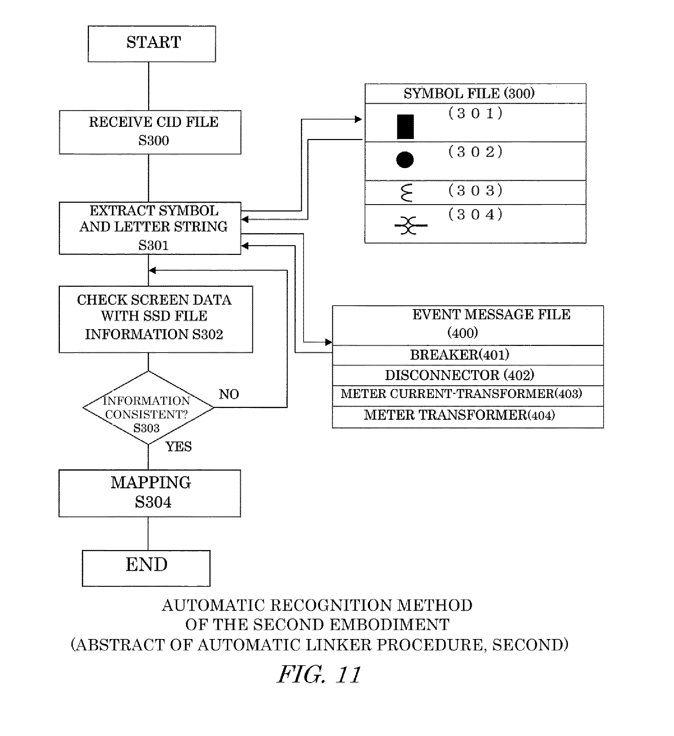

A detail of the automatic recognition method will be explained with reference to FIG. 11.

In FIG. 11, the data receiver 24 of the automatic linker 23 collects the CID file 9 at the MU end through a transmission rule defined in the IEC 61850 standard (S300). Next, based on the theoretical node extracted from the information in the CID file 9 in FIG. 6, the screen data generating processor 25 extracts, the symbol to be screen displayed and the letter string corresponding to the theoretical node from the symbol file (300) and the event message file (400) registered in advance (S301). When, for example, the theoretical node is TCTR (133), a "meter current-transformer" symbol 303, and an event message 403 of the meter current-transformer are extracted from the symbol file 300 and the event message file 400, respectively.

Next, when the IED 3-1 is provided with a screen, and it is necessary to establish a link with screen data, the checkup processor 27 checks the screen data corresponding to each theoretical node generated by the screen data generating processor 25 with the information in the SSD file 11 in FIG. 3 registered in advance by the SSD file registering processor 26 (S302). The range of the screen data necessary for the IED 3-1 varies depending on the kind of the IED, is by one line in the case of a single line, and becomes a screen data range in accordance with a purpose when it is installed for the purpose of, for example, transformer station sharing, voltage classification, or bus line sharing.

The information in the SSD file 11 registered in advance in this case is, according to the above-explained case, the event message for the meter current-transformer and the "meter current-transformer" symbol in the case of TCTR.

When the IED 3-1 needs a screen, there are two methods applicable: a method of storing the SSD file 11 in the IED 3-1; and a method of storing information of the screen in the ICD file 8 at the IED 3-1, and both methods are fine as long as a description in accordance with the IEC 61850 standards is adopted. When the screen information is stored in the ICD file 8, in the checkup process (S302) of the screen data with the SSD file 11 in FIG. 11, the screen data is checked with the ICD file 8.

Upon checkup process, in a determination as to whether or not both pieces of information are consistent with each other (S303), when the consistency is found (S303: YES), the process progresses to a mapping process S304 of the received data. When pieces of information are inconsistent (S303: NO), the checkup process S302 of the screen data with SSD file information is repeated. Next, based on the device unique number in the information in the CID file 9 to generate the CID file 9A in FIG. 9, the mapping processor 28 assigns the symbol and the event message obtained upon checkup process with the one-line wiring diagram and the message on the event screen, and registers the generated file in the IED 3-1. The server/HMI 1 generates the SCD file 12 based on the method explained in the first embodiment using this CID file 9 or 9A.

### (Advantageous Effects)

According to this embodiment, the IED 3-1 can perform automatic recognition on a new assignment to the bus through the above-explained method. Hence, an individual setting of each line terminal that needs expertness for an exclusive tool by a human becomes unnecessary, and it is expected that a latent error due to a false setting can be prevented. In addition, it is expected that the reliability can be improved and a power suspension time relating to an installation of a new device can be reduced.

### [Third Embodiment]

### (Automatic Recognition When IED and MU are Assigned to New Bus)

Next, an explanation will be given of a third embodiment of the present disclosure. A transformer station automation system of this embodiment performs automatic recognition when the IED 3-1 and the MU 4-1 are assigned to a new bus. That is, this embodiment relates to a method combining the method of causing the server/HMI 1 to perform automatic recognition of a new assignment of the IED when the IED 3-1 is assigned to a new system bus according to the first embodiment, and the method of causing the IED 3-1 to perform automatic recognition on a new assignment of the MU when the MU 4-1 is assigned to a new process bus according to the second embodiment.

An expectable case in which the IED 3-1 or the MU 4-1 is installed in solo is only a case in which a terminal is replaced after the installation due to an occurrence of a defect. Hence, as the procedure of installing a new terminal at the time of, for example, increasing the number of lines, first, the IED 3-1 to be added is assigned to the system bus, and then the MU 4-1 to be added is assigned to the process bus. Automatic connection recognition (plug-and-play) on the terminal installation is enabled through this procedure. That is, the automatic recognition method of the second embodiment is performed after the execution of the automatic recognition method of the first embodiment so as to enable automatic connection recognition of the IED 3-1 and MU 4-1 to be added at the time of increasing the number of lines. Therefore, it is expected that an expert knowledge of a terminal connection becomes unnecessary, and a highly reliable system that prevents and occurrence of a setting error is provided.

### [Fourth Embodiment]

### (Automatic Recognition When Bus-line Protective IED is Assigned to Process Bus 7)

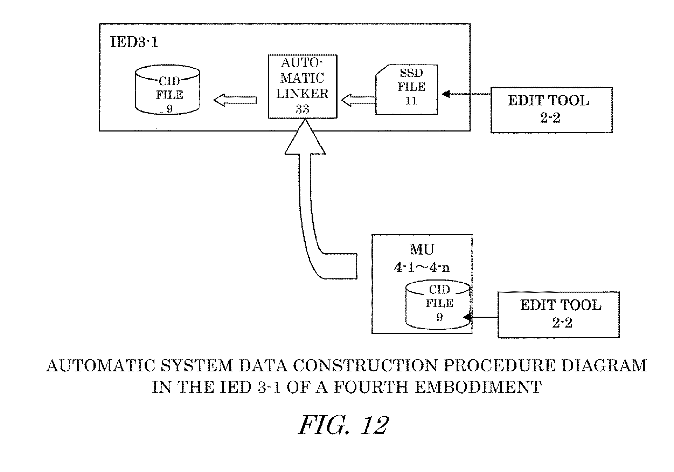

An explanation will be given of a transformer station automation system according to a fourth embodiment of the present disclosure with reference to FIGS. 12 to 15. The fourth embodiment is a modified example of the second embodiment, and relates to automatic recognition of the IED 3-1 that automatically recognizes the necessary number of MUs from which the IED 3-1 needs to receive data among the MUs 4-1 to 4-n transmittingly connected at the process-bus-7 side. When the IED 3-1 for protecting the bus-line that needs to automatically obtain reception data from the multiple MUs 4-1 to 4-n is assigned to the process bus 7, it is necessary to receive electronic-current data of the system from the MUs 4-1 to 4-n in all lines connected to the bus line to be protected through a transmission in compliance with the IEC 61850 standard.

### (Automatic System Data Construction Procedure)

FIG. 12 is an automatic system data construction procedure diagram in the IED 3-1.

First, in order to provide a plug-and-play technology for an automatic connection recognition when the IED 3-1 (in this example, a bus-line protective IED) is newly assigned to the process bus 7, the SSD file 11 is generated in advance using the edit tool 2-2, and is installed in the IED 3-1. The SSD file 11 contains the one-line wiring diagram data. The CID file 9 delivered from the manufacturer of the MUs 4-1 to 4-n is subjected to data collection from the MUs 4-1 to 4-n through the process bus 7 in accordance with the transmission rule defined in the IEC 61850 standard, and is linked with the already-installed SSD file 11 by an automatic linker 33 to generate the CID file 9A.

Since the name of MU and the IP address thereof are contained in the CID file 9 at the MUs 4-1 to 4-n, generation thereof using the edit tool 2-2 is unnecessary. Hence, various information defined in the CID file 9 at the multiple MUs 4-1 to 4-n is simply linked with system construction information, such as an event letter string contained in the SSD file 11, by the automatic linker 33. Accordingly, an automatic recognition (plug-and-play) which needs no data linking work by a human conventionally performed, eliminates an engineering work when the MUs 4-1 to 4-n are assigned, and can automatically obtain reception data from the multiple necessary MUs 4-1 to 4-n can be provided.

### (Configuration of Automatic Linker)

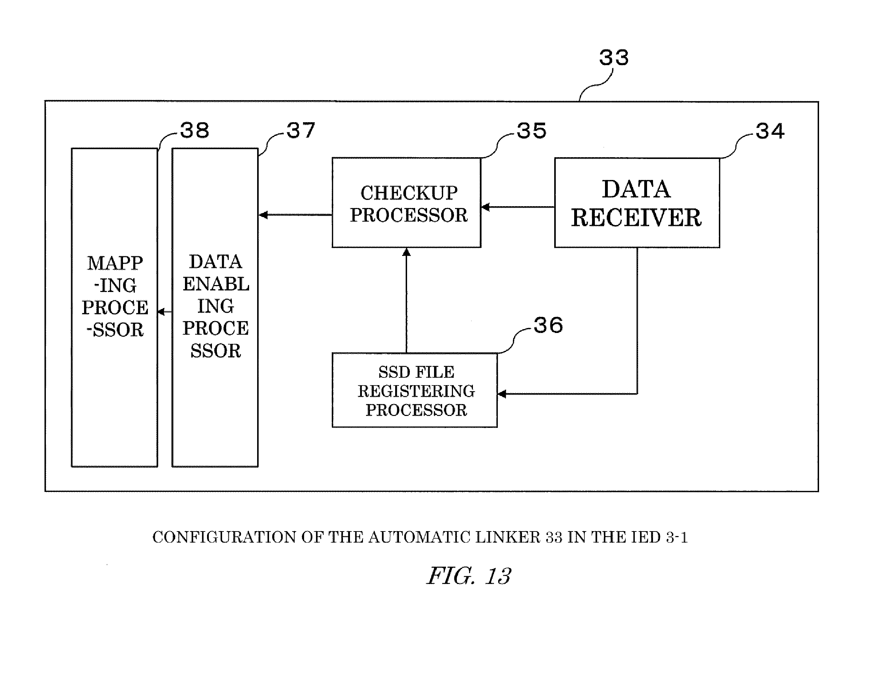

FIG. 13 is a block diagram illustrating a configuration of the automatic linker 33 in the IED 3-1. The automatic linker 33 includes a data receiver 34 that receives the CID file 9, an SSD file registering processor 36 that registers the SSD file information, a checkup processor 35 that checks screen data with the SSD file information, a data enabling processor 37 that enables a consistent reception data upon checkup, and a mapping processor 38 which assigns the data as the one-line wiring diagram and a message on an event screen to generate the CID file 9A, and which registers the generated file in the IED 3-1.

### (Automatic Recognition Method)

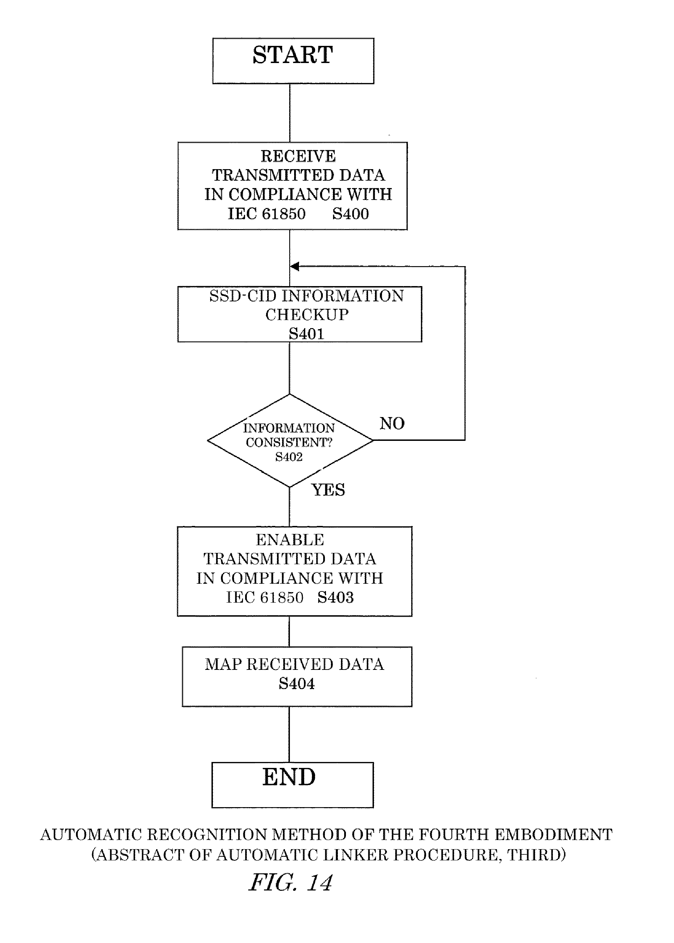

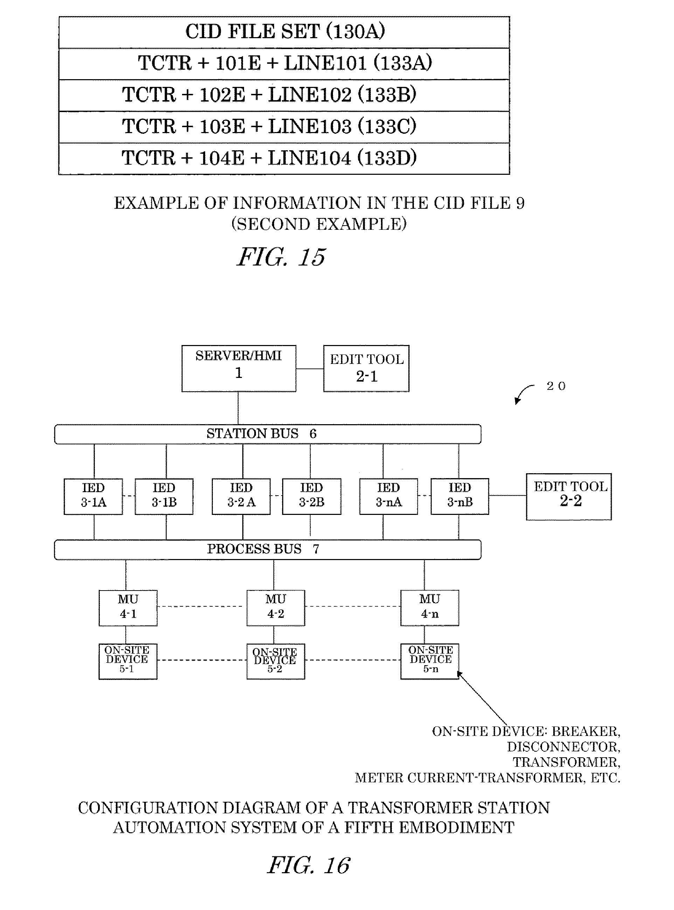

A detail of an automatic recognition method will be explained with reference to FIG. 14. In FIG. 14, the data receiver 34 collects the CID file 9 through a transmission rule defined in the IEC 61850 standard (S400). Next, the checkup processor 35 performs a checkup process between the SSD information and the CID information. More specifically, the theoretical node (TCTR) of the meter current-transformer, the meter current-transformer unique number (101E to 104E), and the line name (101 to 104), extracted from the information in the CID file 9 in FIG. 15 are checked with the information in the SSD file 11 registered in advance by the SSD file registering processor 36 (S401). The information in the already-registered SSD file 11 in this case are the unique number of the "meter current-transformer" same as FIG. 15 in the case of TCTR, and the line name according to the above-explained example.

Upon checkup, in a determination as to whether or not both pieces of information are consistent with each other (S402), when the information consistency is found (S402: YES), the data enabling processor 37 enables a reception of system current values at respective secondary sides of the meter current-transformers of all meter current-transformer unique numbers of the consistent line name (S403), and the process progresses to a reception data mapping process S404. When the pieces of information are inconsistent (S402: NO), the SSD-CID information checkup process S401 is repeated.

Next, the mapping processor 38 assigns the data as the event message based on the current-transformer unique number in the information in the CID file 9 having undergone the checkup to generate the CID file 9A in FIG. 12, and registers the generated file in the IED 3-1 (S404).

### (Advantageous Effects)

According to this embodiment, it becomes possible to automatically recognize the bus-line protective IED 3-1 newly assigned to the process bus 7. Hence, it is expected that a highly reliable system is provided which enables the one IED 3-1 to automatically recognize data reception from multiple MUs 4-1 to 4-n necessary over the system.

### [Fifth Embodiment]

### (Automatic Recognition When IED of First Embodiment is Multiplexed)

An explanation will be given of a fifth embodiment of the present disclosure with reference to FIGS. 16 to 19. The fifth embodiment is an example case in which the IED of the first embodiment is multiplexed.

FIG. 16 is a configuration diagram of a transformer station automation system according to the fifth embodiment. The configuration of the transformer station automation system 20 of this embodiment only differs from the configuration of the transformer station automation system 10 of the first embodiment in FIG. 1 that the IED for each line is multiplexed like 3-1A, 3-1B. According to this embodiment, based on the CID file information of the multiplexed IEDs, a preference is given to the preceding number between the IED numbers allocated to the multiplexed IEDs to enable an automatic recognition of the IED assigned to a new bus. In addition, when a preferentially recognized IED becomes defective, such an IED is automatically switched to the IED in the normal condition and in the secondary order for use.

### (Automatic System Data Construction Procedure)

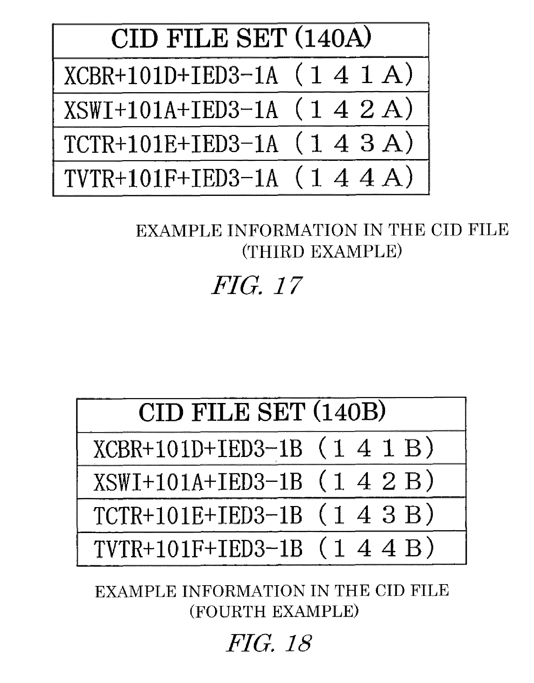

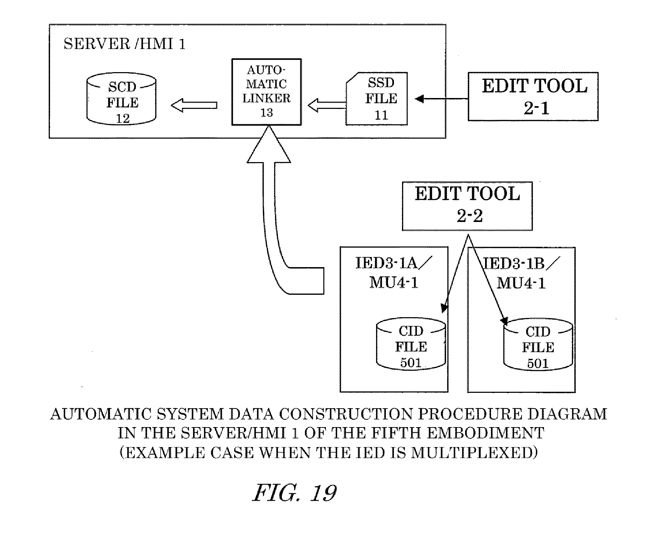

Instead of the CID file (first example: FIG. 6) applied in the first embodiment, an IED-A system CID file set 140A of the example of information (third example) in the CID file in FIG. 17 and an IED-B system CID file set 140B in the example of information (fourth example) in the CID file in FIG. 18 are applied. Those two CID files are processed through the same way as that of the first embodiment as the respective CID files (501, 502) of the IEDs 3-1A, 3-1B, as illustrated in FIG. 19, thereby enabling automatic recognition of both IED systems (IED-A, IED-B).

When, in the server/HMI 1, a data application rule is preferentially fixed to the IED-A system having a preceding number, data at the IED-A system side is normally utilized, and when the IED-A system becomes defective, the data is automatically switched to data at the latter IED-B system side. Accordingly, even if the one IED becomes defective, a normal operation as a system is enabled. In addition, it is appropriate if only the defective IED 3-1A is replaced, and the information from the IED 3-1B switched in accordance with the replacement can be recognized again by the system through the method explained in the first embodiment.

Therefore, according to this embodiment, an initial setting by a human in a terminal replacement work when the terminal becomes defective can be eliminated, and thus it is also expected that a power suspension time at the time of on-site replacement can be reduced.

### [Sixth Embodiment]

### (Automatic Recognition When MU of Second Embodiment is Multiplexed)

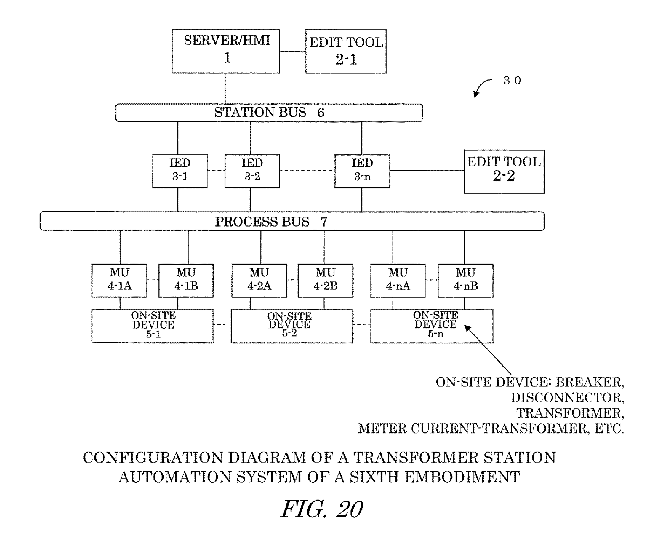

A sixth embodiment of the present disclosure will be explained with reference to FIGS. 20 to 24. The sixth embodiment is an example case in which the MU in the second embodiment is multiplexed.

FIG. 20 is a configuration diagram of a transformer station automation system of the sixth embodiment. The configuration of a transformer station automation system 30 of this embodiment only differs from the configuration of the transformer station automation system 10 of the first embodiment in FIG. 1 that the MU for each line is multiplexed like 4-1A, 4-1B. In this embodiment, a preference is given to the preceding number between the MU numbers allocated to the multiplexed MUs based on the CID file information of the multiplexed MUs to enable automatic recognition of the MU assigned to a new bus. In addition, when the preferentially recognized MU becomes defective, such an MU is automatically switched to the MU in the normal condition and in the secondary order for use.

### (Automatic System Data Construction Procedure)

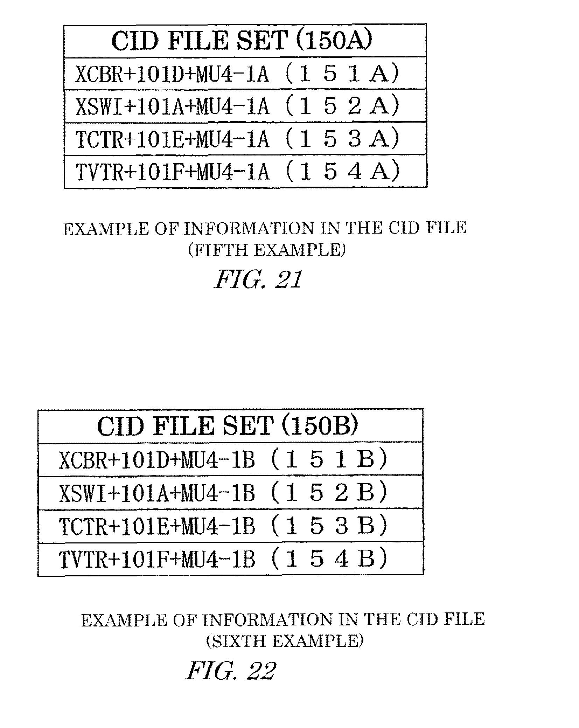

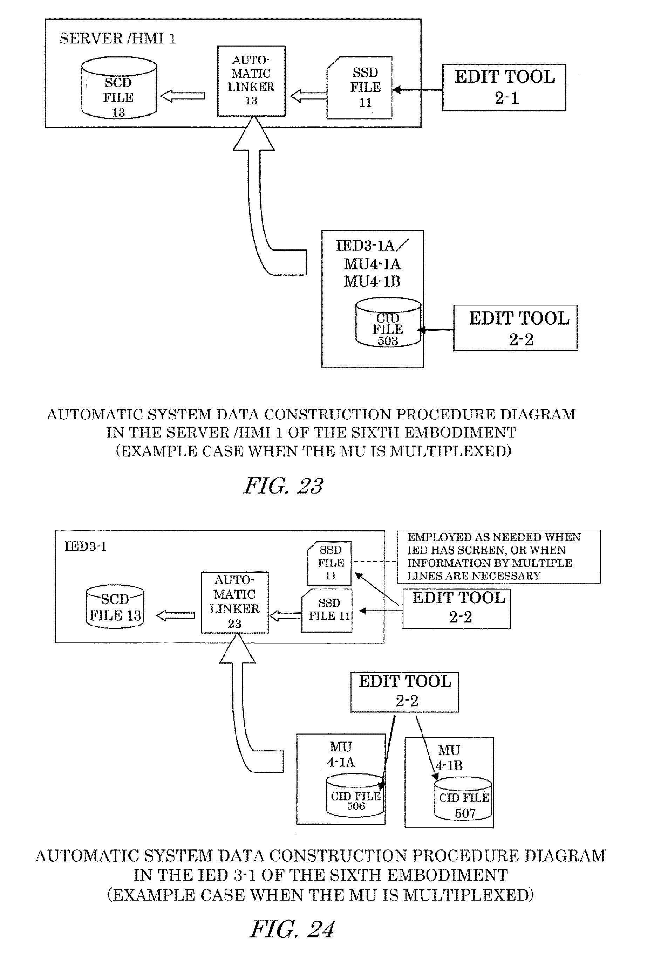

Instead of the CID file 9 (first example: FIG. 6) applied in the second embodiment, an MU-A system CID file set 150A of the example of information (fifth example) of the CID file in FIG. 21, and an MU-B system CID file set 150B of the example of information (sixth example) of the CID file in FIG. 22 are applied. That is, according to this embodiment, a CID file 503 of the IED 3-1A in FIG. 23 and, respective CID files (506, 507) of the MUs 4-1A, 4-1B are processed through the same way as that of the second embodiment to enable automatic recognition of both MU systems (MU-A, MU-B).

When a data application rule is preferentially fixed to the MU-A system having a preceding number, data at the MU-A system side is normally utilized, and when the MU-A system becomes defective, data is automatically switched to data at the latter MU-B system. Accordingly, even if the one MU becomes defective, a normal operation as a system is enabled. In addition, it is appropriate if only the defective MU 4-1A is replaced, and the information from the MU 4-1B switched in accordance with the replacement can be recognized again by the system through the method explained in the second embodiment.

Therefore, according to this embodiment, an initial setting by a human in a terminal replacement work when the terminal becomes defective can be eliminated, and thus it is also expected that a power suspension time at the time of on-site replacement can be reduced.

### [Seventh Embodiment]

### (Automatic Recognition When IED and MU are Multiplexed)

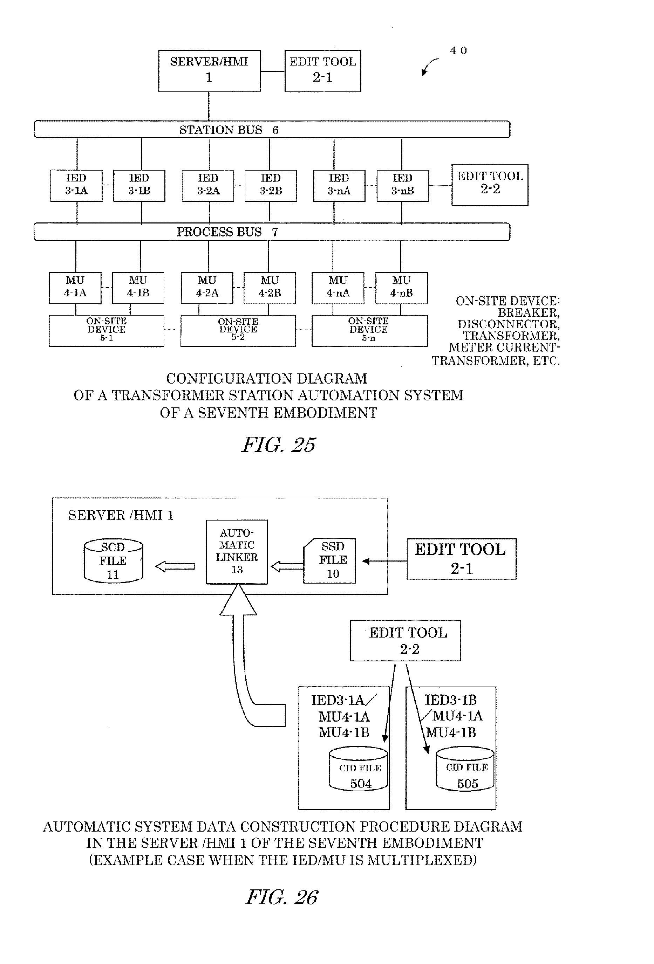

A seventh embodiment of the present disclosure will be explained with reference to FIGS. 25 to 27. The seventh embodiment is an example case that is a combination of the fifth and sixth embodiments to multiplex the IED and the MU.

FIG. 25 is a configuration diagram of a transformer station automation system of the seventh embodiment. The configuration of a transformer station automation system 40 of this embodiment only differs from the configuration of the transformer station automation system 20 of the fifth embodiment in FIG. 16 that the MU for each line is multiplexed like 4-1A, 4-1B. In this embodiment, based on the CID file information of the multiplexed IEDs and the CID file of the multiplexed MUs, the multiplexed IEDs and the multiplexed MUs assigned to a new bus can be automatically recognized. In addition, when the preferentially recognized IED or MU with a preceding number becomes defective, such an IED or MU is automatically switched to the IED or MU in the normal condition and with the latter number for use.

### (Automatic System Data Construction Procedure)

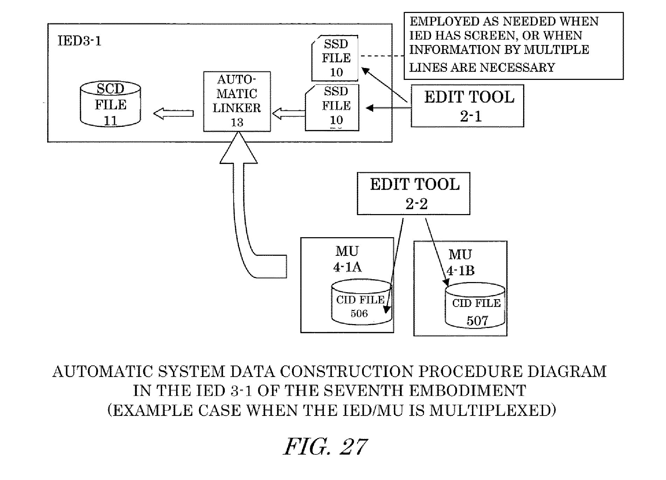

According to this embodiment, as illustrated in FIG. 26, respective CID files (504, 505) of the IEDs 3-1A, 3-1B, and as illustrated in FIG. 27, respective CID files (506, 507) of the MUs 4-1A, 4-1B are processed through the same way as those of the first and second embodiments to enable automatic recognition of both IED systems (IED-A, IED-B), and both MU systems (MU-A, MU-B).

When a data application rule is preferentially fixed to the IED-A/MU-A system having a preceding number, data at the IED-A/MU-A system side is normally utilized, and when the A system becomes defective, data is automatically switched to data at the latter B system. Accordingly, even if the one IED and the one MU both become defective (multiplex failure), a normal operation as a system is enabled. In addition, it is appropriate if only the defective IED 3-1A/MU 4-1A is replaced, and the information from the IED 3-1B/MU 4-1B switched in accordance with the replacement can be recognized again by the system through the method explained in the first or second embodiment.

Therefore, according to this embodiment, an initial setting by a human in a terminal replacement work when the terminal becomes defective can be eliminated, and thus it is also expected that a power suspension time at the time of on-site replacement can be reduced.

### [Other Embodiments]

(1) In the aforementioned respective embodiments, the explanation was given for, in particular, the IED 3-1 as the example IED, but the IED may be any one of the IEDs 3-1 to 3-n.
(2) In the aforementioned respective embodiments, the explanation was given for, in particular, the MU 4-1 as the example MU, but the MU may be any one of the MUs 4-1 to 4-n.
(3) The specific example of the present disclosure was explained in the present specification, but the specific example is merely presented as an example, and is not intended to limit the scope and spirit of the present disclosure. The present disclosure can be carried out in other various forms, and permits various omissions, replacements, and modifications without departing from the scope and spirit of the present disclosure. Such forms and modifications thereof are within the scope and spirit of the present disclosure, and are also within the equivalent range of the subject matter as recited in appended claims.

## Claims

1. A transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station,
the central monitor/control apparatus comprising, for automatically recognizing a newly assigned protective control terminal:
a receiver obtaining a CID file containing unique information of the protective control terminal assigned to the process bus;
a screen data generating processor extracting a symbol to be screen displayed and a letter string from the CID file based on a predetermined rule;
a registering processor registering information of an SSD file recorded with at least a system configuration of the transformer station;
a checkup processor checking data of the symbol to be screen displayed and the letter string with the information of the SSD file; and
a mapping processor assigning the data of the symbol to be screen displayed and the letter string to the information relating to the system configuration in the SSD file based on the unique information in the CID file to generate an SCD file when the data of the symbol to be screen displayed and the letter string are consistent to the information in the SSD file upon checkup.

2. A transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station,
the protective control terminal comprising, for automatically recognizing a newly assigned device terminal:
a receiver obtaining a CID file containing device unique information of the device terminal assigned to the process bus;
a screen data generating processor extracting a symbol to be screen displayed and a letter string from the CID file based on a predetermined rule;
a registering processor registering information of an ICD or SSD file recording with at least a system configuration of the transformer station;
a checkup processor checking data of the symbol to be screen displayed and the letter string with the information of the ICD or SSD file; and
a mapping processor assigning the data of the symbol to be screen displayed and the letter string to the information relating to the system configuration in the ICD or SSD file based on the device unique information in the CID file to generate a CID file when the data of the symbol to be screen displayed and the letter string are consistent with the information of the ICD or SSD file upon checkup.

3. The transformer station automation system according to claim 1, wherein the protective control terminal comprises:
a receiver obtaining a CID file containing device unique information of the device terminal assigned to the process bus;
a screen data generating processor extracting a symbol to be screen displayed and a letter string from the CID file based on a predetermined rule;
a registering processor registering information of an ICD or SSD file recording with at least a system configuration of the transformer station;
a checkup processor checking data of the symbol to be screen displayed and the letter string with the information of the ICD or SSD file; and
a mapping processor assigning the data of the symbol to be screen displayed and the letter string to the information relating to the system configuration in the ICD or SSD file based on the device unique information in the CID file to generate a CID file when the data of the symbol to be screen displayed and the letter string are consistent with the information of the ICD or SSD file upon checkup.

4. A transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station,
the protective control terminal comprising, for automatically recognizing an assignment of a new protective control terminal subjected to a transmissive connection with a plurality of device terminals:
a receiver obtaining a CID file containing device unique information of a plurality of the device terminals assigned to the process bus;
a registering processor registering information of an SSD file recorded with at least information on a meter current-transformer;
a checkup processor checking information relating to the meter current-transformer extracted from the CID file with the information of the SSD file;
a data enabling processor enabling the information relating to the meter current-transformer when the information on the meter current-transformer extracted from the CID file are consistent with the information of the SSD file upon checkup; and
a mapping processor assigning the information on a system configuration in the SSD file with letter string data relating to the meter current-transformer to generate a CID file based on the information relating to the meter current-transformer in the CID file when the information on the meter current-transformer extracted from the CID file are consistent with the information of the SSD file upon checkup.

5. The transformer station automation system according to any one of claims 1 to 4, wherein:
each protective control terminal is further multiplexed and ranked in accordance with a predetermined rule;
the protective control terminal with a preceding order is preferentially recognized for use; and
when the preferentially recognized protective control terminal becomes defective, the defective protective control terminal is automatically switched to the protective terminal with a next order for use.

6. The transformer station automation system according to any one of claims 1 to 5, wherein:
each device terminal is further multiplexed and ranked in accordance with a predetermined rule:
the device terminal with a preceding order is preferentially recognized for use; and
when the preferentially recognized device terminal becomes defective, the defective protective control terminal is automatically switched to the device terminal with a next order for use.

7. A terminal automatic recognition method of a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the method comprising steps of:
registering an SSD file recorded with at least a system configuration of the transformer station in the central monitor/control apparatus;
obtaining, by the central monitor/control apparatus, a CID file containing unique information of the protective control terminal assigned to the process bus;
extracting a symbol to be screen displayed and a letter string from the CID information in accordance with a predetermined rule; and
checking data of the symbol to be screen displayed and
the letter string with information of the SSD file, and assigning the data of the symbol to be screen displayed and the letter string to the information relating to the system configuration in the SSD file based on the unique information in the CID file to generate an SCD file when the data of the symbol to be screen displayed and the letter string are consistent to the information in the SSD file.

8. A terminal automatic recognition method of a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the method comprising steps of:
registering an ICD or SSD file recorded with at least a system configuration of the transformer station in the protective control terminal;
obtaining, by the protective control terminal, a CID file containing device unique information of the device terminal assigned to the process bus;
extracting a symbol to be screen displayed and a letter string from the CID information in accordance with a predetermined rule; and
checking data of the symbol to be screen displayed and the letter string with information of the ICD or SSD file, and assigning the data of the symbol to be screen displayed and the letter string to the information relating to the system configuration in the ICD or SSD file based on the device unique information in the CID file to generate an CID file when the data of the symbol to be screen displayed and the letter string are consistent with the information of the ICD or SSD file.

9. A terminal automatic recognition method of a transformer station automation system coupling, through a process bus, a plurality of distributed protective control terminals with a device terminal which relays a target device to be monitored and controlled, and coupling, through a station bus, the protective control terminal with a central monitor/control device for monitoring and controlling a transformer station, the method comprising steps of:
registering an SSD file recorded with at least information relating to a meter current-transformer in the protective control terminal;
obtaining, by the protective control terminal, a CID file containing device unique information of a plurality of the device terminals assigned to the process bus;
checking information relating to the meter current-transformer extracted from the CID file with the information of the SSD file, and enabling the information relating to the meter current-transformer when the information on the meter current-transformer extracted from the CID file are consistent with the information of the SSD file; and
assigning the information on a system configuration in the SSD file with letter string data relating to the meter current-transformer based on the information relating to the meter current-transformer in the CID file to generate a CID file.
